# EUROPÄISCHE PATENTSCHRIFT

(11) **EP 0 360 161 B1**
(45) Veröffentlichungstag und Bekanntmachung des Hinweises auf die Patenterteilung: **02.02.1994**
(21) Anmeldenummer: 89117067.2
(22) Anmeldetag: 14.09.1989
(51) Int. Cl.: A61C 17/32

(54) **Gerät zur Zahnbehandlung**
Device for dental treatment
Dispositif pour soins dentaires

(30) Priorität: 20.09.1988 CH 3495/88
(43) Veröffentlichungstag der Anmeldung: 28.03.1990
(73) Patentinhaber: MIKRONA TECHNOLOGIE AG, CH-8957 Spreitenbach (CH); Römhild, Ludwig, Dr., D-83471 Berchtesgaden (DE)
(72) Erfinder: Römhild, Ludwig, Dr., D-8240 Berchtesgaden (DE); Meier, Peter, CH-5442 Fislisbach (CH); Schwander, André, CH-5400 Baden (CH)
(74) Vertreter: EGLI-EUROPEAN PATENT ATTORNEYS

(56) Entgegenhaltungen:
- EP-A- 0 064 871
- EP-A- 0 191 574
- EP-A- 0 230 846
- CH-A- 291 667
- US-A- 2 135 933

## Beschreibung

Die Erfindung betrifft ein Gerät zur Zahnbehandlung gemäss dem Oberbegriff des Anspruchs 1. Derartige Geräte werden vor allem zur Behandlung von unter dem Zahnfleisch liegenden Wurzelpartien eines Zahns eingesetzt.

Aus der EP-A-0 191 574 ist ein gattungsgemässes Gerät bekannt, welches für die Reinigung und Erweiterung von Wurzelkanälen geeignet ist und bei welchem der Kupplungsring durch Druck gegen die Kraft einer Feder aus der Verriegelungs- in die Entriegelungsposition geschoben werden kann. Da die Bewegungsrichtung der Lagerhülse, welche das Werkzeug aufnimmt, in der gleichen Richtung erfolgt wie die Umschaltung zwischen Ver- und Entriegelungsposition, dürfte eine zuverlässige Verriegelung nur dann gegeben sein, wenn die Kraft der Feder, welche den Kupplungsring in der Verriegelungsposition hält, verhältnismässig gross ist, da sonst störende Einflüsse von der oszillatorischen Bewegung der Lagerhülse auf das Werkzeug nicht ausgeschlossen werden können, eventuell auch Resonanz auftreten kann. Daraus folgt jedoch, dass zur Entriegelung des Werkzeugs ein grosser Kraftaufwand nötig ist und das Gerät entsprechend robust gebaut sein muss.

Hier soll die Erfindung Abhilfe schaffen. Durch die Erfindung, wie sie in den Ansprüchen gekennzeichnet ist, wird ein Gerät geschaffen, bei welchem die Verriegelung von der Betätigung des Werkzeugs entkoppelt ist. Die Verriegelung ist zuverlässig, kann aber trotzdem leicht und ohne großen Kraftaufwand gelöst werden.

Besonders geeignet ist das erfindungsgemässe Dentalgerät zur Verwendung mit Polierwerkzeugen, welche zum Glätten und Polieren der Zahnwurzel in eine harmonische Schwingung versetzt werden sollen.

Im folgenden wird die Erfindung anhand von Zeichnungen, welche Ausführungsbeispiele zeigen, näher erläutert. Es zeigen
- Fig. 1: einen Längsschnitt durch ein Dentalgerät mit einem Polierer,
- Fig. 2: einen Schnitt längs der Linie II-II in Fig. 1,
- Fig. 3: eine Seitenansicht eines Polierwerkzeugs,
- Fig. 4: eine Ansicht des Endstückes des Polierwerkzeuges nach Fig. 3 aus Richtung A und
- Fig. 5: eine Ansicht des Endstückes des Polierwerkzeuges nach Fig. 3 aus Richtung B,
- Fig. 6: eine Seitenansicht eines weiteren Polierwerkzeuges,
- Fig. 7: eine Stirnansicht des Polierwerkzeuges nach Fig. 6,
- Fig. 8: eine Seitenansicht eines dritten Polierwerkzeuges,
- Fig. 9: eine Stirnansicht des Polierwerkzeuges nach Fig. 8 und
- Fig. 10: einen Vertikalschnitt eines weiteren Winkelstückes ähnlich demjenigen nach Fig. 1 und 2, jedoch in vereinfachter Ausführung.

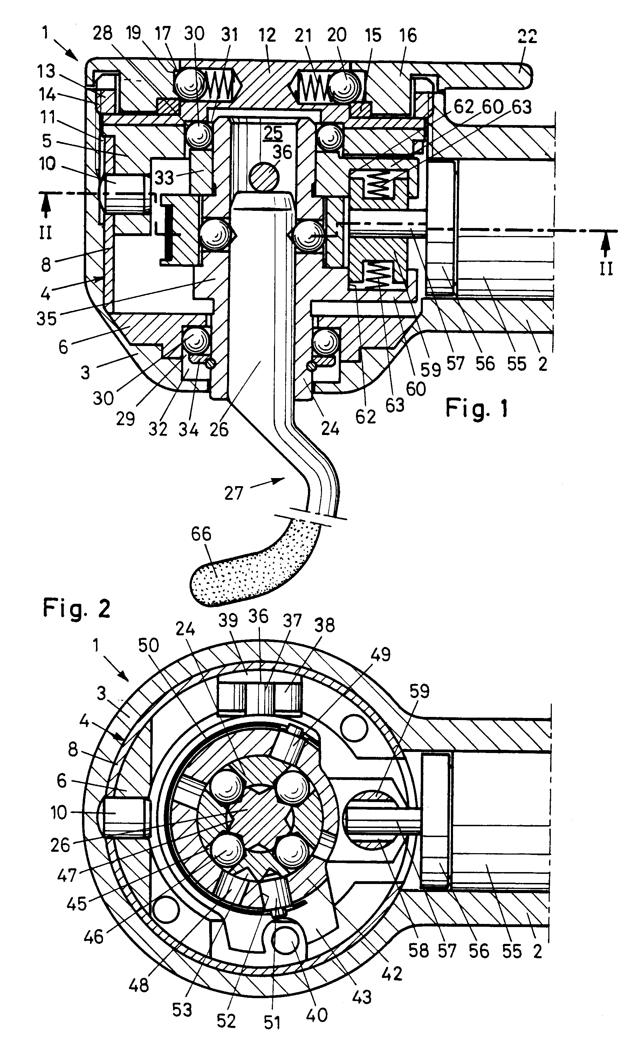

Das in Figur 1 dargestellte Poliergerät weist ein als Winkelstück ausgebildetes Gehäuse auf, das sich aus einem nur teilweise dargestellten Griffgehäuse 2 und einem Werkzeuggehäuse 3 zusammensetzt. In dem Griffgehäuse 2 ist in bekannter Weise ein Motor für den Antrieb des Poliergerätes eingesetzt. Es ist aber auch möglich, das Griffgehäuse mit der flexiblen Welle des Hauptantriebes einer zahnärztlichen Einrichtung zu kuppeln, sodass das Poliergerät 1 in diesem Fall keinen eigenen Antrieb benötigt. In dem Werkzeuggehäuse 3 ist ein Innengehäuse 4 eingesetzt, welches aus einem oberen Lagersteg 5, einem unteren Lagersteg 6 und einem dazwischen liegenden Stützring 8 besteht. Ein Führungsbolzen 10 verbindet den oberen Lagersteg 5 und den Stützring 8 und ragt in eine an der Innenwand des Werkzeuggehäuses 3 eingearbeitete Führungsnut 11. Damit ist das Innengehäuse 4 gegenüber dem Werkzeuggehäuse 3 positioniert.

Auf dem oberen Lagersteg 5 ist ein Deckel 12 aufgesetzt, der zusammen mit dem Innengehäuse 4 durch eine Ringmutter 13 festgeklemmt wird, die in ein in der Innenwand des Werkzeuggehäuses 3 angeordnetes Innengewinde 14 eingeschraubt ist. In den Deckel 12 ist ein Kugelhaltering 15 eingelegt.

Der Deckel 12 wird von einem, eine Bohrung 17 aufweisenden Schaltring 16 umfasst. In der Bohrung 17 ist eine Radialrille eingearbeitet, in die durch eine Feder 21 Rastkörper 20, z.B. Kugeln, für die Halterung des Schaltringes 16 einrasten. Zur Positionierung des Schaltringes 16 sind zwei Positionierausnehmungen 19 (eine davon in Figur 1 sichtbar) für den Eingriff eines der Rastkörper 20 vorgesehen. Der Schaltring 16 ist mit zu seiner Verstellung dienenden Verstellmitteln, z.B. einem Hebel 22 oder einer Randrierung versehen.

Im Innengehäuse 4 ist eine Lagerhülse 24 gelagert, welche eine Bohrung 25 zur Aufnahme des Schaftes 26 eines Polierwerkzeuges 27 aufweist. Die Lagerhülse 24 ist in Lagern 28, 29 axial verschiebbar geführt. Die Lager 28, 29 sind Wälzlager mit Wälzkugeln 30, welche in Ausnehmungen 31, 32 des Innengehäuses 4 liegen, wobei die Ausnehmung 31 des oberen Lagers 28 durch den Deckel 12 und durch einen Stützring 33 und die Ausnehmung 32 des unteren Lagers 29 durch den unteren Lagersteg 6 und einen an der Lagerhülse 24 abgestützten Stützring 34 begrenzt ist. Die Lagerhülse 24 weist eine zwischen den Lagern 28, 29 liegende Partie 35 grösserer Wandstärke auf, über welcher sich ein Sicherungsstift 36 diagonal durch die Lagerhülse 24 erstreckt, welcher an seinem einen Ende 37 ein Wälzlager 38 trägt, das in einem Schlitz 39 des oberen Lagersteges 5 geführt ist. Durch den im Schlitz 39 geführten Sicherungsstift 36 wird eine Rotation der Lagerhülse 24 verunmöglicht, siehe Fig. 2.

In Fig. 2 ist ein im Schaltring 16 befestigter Mitnehmerstift 40 befestigt, der in den Bereich der Partie 35 grösseren Durchmessers der Lagerhülse 24 ragt, die von einem Kupplungsring 42 umgeben ist, die an ihrem Aussenumfang eine Schaltgabel 43 aufweist, in welche der Mitnehmerstift 40 ragt.

Die Funktion des Kupplungsringes 42 kann am besten anhand von Figur 2 erläutert werden.

In der verdickten Partie 35 der Lagerhülse 24 sind vier diametral gegenüber liegende Bohrungen 45 angeordnet, in denen Kupplungskörper 46 z.B. Kugeln, geführt sind, welche in der in Figur 2 dargestellten Lage in am Aussenumfang des Schaftes 26 des Polierwerkzeugs 27 angeordnete Vertiefungen 47 ragen und damit das Polierwerkzeug mit der Lagerhülse 24 kuppeln. Zum Entkuppeln, d.h. zum Wechseln oder zum Drehen des Poliergerätes 27 wird der Kupplungsring 42 solange gedreht, bis die darin diametral angeordneten Bohrungen 48 mit den Bohrungen 45 der Lagerhülse 24 fluchten. In der einen Bohrung 48 des Kupplungsringes 42 ist ein Druckbolzen 49 durch eine Ringfeder 50 gehalten. Das andere Ende der Ringfeder 50 wirkt auf einen Positionierbolzen 51, welcher in einer Bohrung 52 des Kupplungsringes 42 angeordnet ist und in am Aussenumfang der Lagerhülse 24 angeordnete Vertiefungen 53 ragt.

In der in Figur 2 gezeichneten Lage sind die Kupplungskörper 46 in Vertiefungen 47 des Schaftes 26 blockiert. Wird nun der Kupplungsring 42 im Uhrzeigersinn gedreht, bis die Bohrungen 48 mit den Bohrungen 45 fluchten, können die Kupplungskörper 46 in die Bohrungen 48 ausweichen, sodass das Polierwerkzeug 27 ausgewechselt, entfernt oder in eine neue Position gedreht werden kann. In der entkuppelten Lage ist der Positionierbolzen 51 in die benachbarte Vertiefung 53 eingerastet. Dadurch lässt sich die Kupplungs- und die Entkupplungslage des Kupplungsringes 42 einhalten. Die Verschiebung des Kupplungsringes erfolgt durch Drehen des Schaltringes 16, siehe Fig. 1, wodurch der Mitnehmerstift 40 die Schaltgabel 43 und damit den Kupplungsring 42 in die gewünschte Lage dreht.

Im Griffgehäuse 2 ist eine Antriebswelle 55 drehbar gelagert; sie weist an ihrem Ende beim Uebergang des Griffgehäuses 2 an der Stirnseite 56 einen exzentrisch angeordneten Stift 57 auf. Dieser Stift ragt in einen Schlitz 58 eines Hubbolzens 59. Der Hubbolzen 59 ist in Bohrungen 62 zweier Arme längs verschieblich gestützt, wobei an den Stirnseiten des Hubbolzens 59 je eine Druckfeder 63 mit ihrem einen Ende abgestützt ist, während das andere Ende sich an einem der Arme 60 abstützt. Der eine Arm 60 ist mit dem Stützring 33 verbunden.

Durch den Exzenterstift 57 wird bei der Rotation der Antriebswelle 55 der Hubbolzen 59 in hin- und hergehende Vibrationen versetzt. Diese werden nur über die Druckfedern 63 auf die Arme 60 und damit auf die Lagerhülse 24 übertragen. Dadurch erhält das Polierwerkzeug 27 eine hin- und hergehende Schwingbewegung, die in beiden Hubrichtungen denselben Verlauf aufweist, und damit ist es möglich, die für die Glättung der Wurzelzahnoberfläche geeignete Bewegung zu erzeugen. Diese Bewegung kann durch unterschiedliche Federn 63 beeinflusst werden.

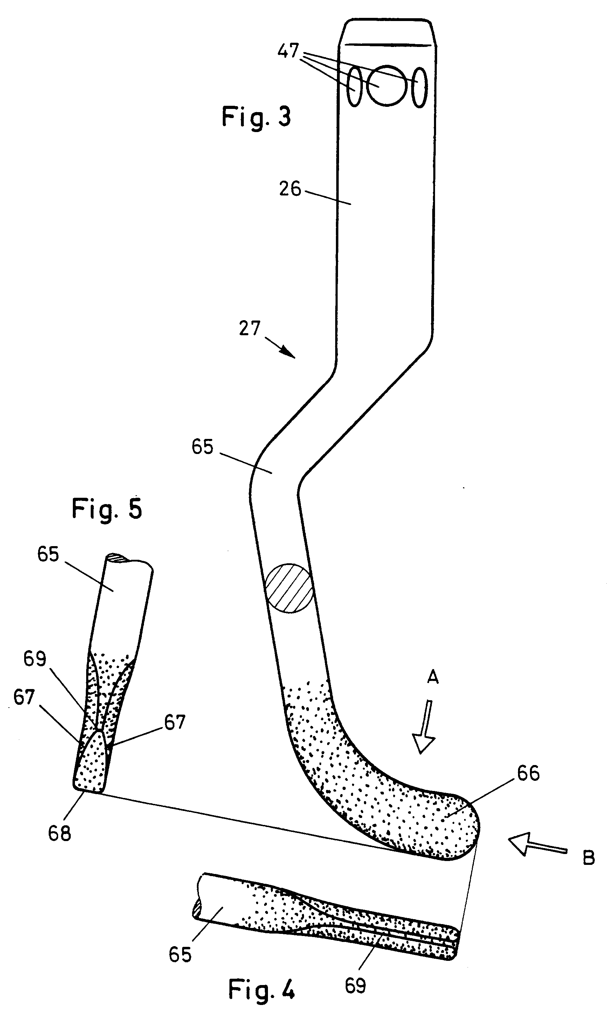

Das in Fig. 3 dargestellte Polierwerkzeug 27 weist einen Schaft 26 auf, an den sich ein abgekröpfter Schaftteil 65 anschliesst, der Kreisquerschnitt aufweist. An den Schaftteil 65 schliesst ein Endstück 66 an, dessen Form aus Figur 4 und 5 erkennbar ist. Wesentlich ist, siehe Figur 5, dass das Endstück 66 zwei Flanken 67 aufweist, die in Richtung des Werkzeuggehäuses 3 zusammenlaufen. Diese Flanken 67 üben die Polierwirkung auf die Zahnwurzel aus. Auf der dem Werkzeuggehäuse 3 abgewandten Seite weist das Profil eine ebene Fläche 68 auf. Aus Figur 4 und 5 ist ersichtlich, dass die Flanken 67 einen Kamm 69 bilden. Das Endstück 66 kann zudem mit Diamantstaub beschichtet sein.

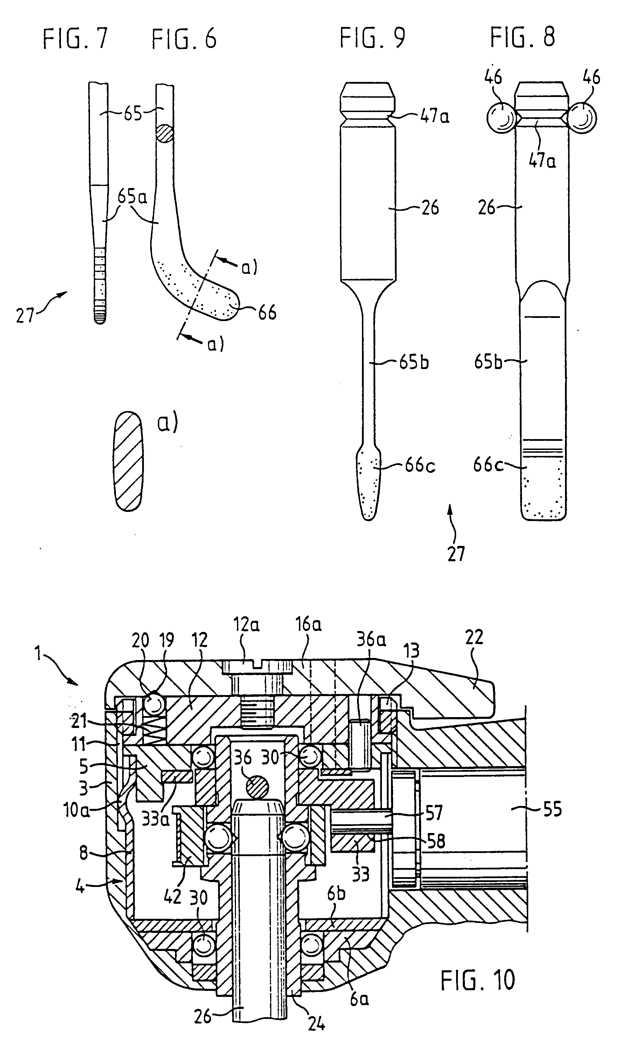

In Figur 6 und 7 ist ein weiteres Polierwerkzeug 27 dargestellt, das demjenigen nach Figur 3 ähnlich ist, jedoch ein nach allen Seiten abgerundetes Endstück 66 aufweist, siehe den Querschnitt in der Nebenfigur a). Bei diesem Polierwerkzeug sind der Schaft und der abgekröpfte Schaftteil gleich ausgebildet wie beim Polierwerkzeug nach Figur 3. Der abgekröpfte Schaftteil 65 mit Kreisquerschnitt geht in eine Uebergangspartie 65a über, in welcher der Schaftquerschnitt eine ovale Form annimmt, worauf das abgewinkelte Endstück 66 mit einem länglichen, allseits abgerundeten Querschnitt folgt, siehe Nebenfigur a). Mit dem Polierwerkzeug nach Figur 6 und 7 ist es möglich, die Zahnwurzelpartien zu bearbeiten, insbesondere die Zahnwurzelpartien in den Zahnzwischenräumen. Hierzu ist es erforderlich, dass dieses Werkzeug im Schaft dieselben Vertiefungen 47 aufweist wie der Schaft nach Figur 3, damit die Lage des Endstückes 66 gegenüber dem Winkelstück 1 fixiert ist.

In Fig. 8 und 9 ist ein drittes Polierwerkzeug dargestellt, das in seiner Ausführung erheblich von der Form der Polierwerkzeuge nach Figur 3 und 6 abweicht. Wesentlich ist hierbei, dass das birnen- oder spatenförmige Endstück 66c gegenüber dem Schaft 26 nicht abgekröpft ist. Das Polierwerkzeug nach Figur 8 und 9 ist somit als gerader Stab ausgebildet, bei welchem der Schaft 26 in ein schmales Schaftteil 65b übergeht, an welches das Endstück 66c anschliesst, welches dieselbe Seitenausdehnung aufweist wie der Schaftteil 65b.

Das Polierwerkzeug 27 nach Fig. 8 und 9 weist die weitere Besonderheit auf, dass keine Vertiefungen im oberen Ende des Schaftes 26, sondern eine Befestigungsrille 47a vorgesehen ist. Dies bedeutet, dass das Polierwerkzeug in der Lagerhülse 24 gehalten ist, sich jedoch drehen kann und damit selbstzentrierend ist. Mit diesem Polierwerkzeug ist es möglich, Wurzelflächen besonders vorteilhaft zu bearbeiten, welche frei zugänglich sind. Wegen der freien Drehbarkeit dieses Polierwerkzeuges kann sich das Endstück 66c den Wurzelpartien anschmiegen, wodurch die Polierarbeit erleichtert wird. Dagegen ist dieses Polierwerkzeug für die Behandlung von Wurzelpartien zwischen benachbarten Zähnen weniger geeignet. Die Polierwerkzeuge nach Figur 3 und 6 können als Universal-Polierwerkzeuge bezeichnet werden, während das Polierwerkzeug nach Figur 8 und 9 eher ein Spezial-Polierwerkzeug ist.

In Figur 10 ist eine vereinfachte Ausführungsform des Winkelstückes 1 dargestellt. Die wesentlichen Teile der Lagerhülse 24 und des Kupplungsringes 42 sind unverändert gegenüber der Ausführung nach Figur 1 und 2. Vereinfacht wurde der Exzenterantrieb und der obere Teil des Werkzeuggehäuses 3. Der Schlitz 58 zur Aufnahme des Exzenterstiftes 57 ist im Stützring 33 angebracht, wobei die Federn 63 nach Figur 1 wegfallen. Der Führungsbolzen 10 wird durch einen geprägten Vorsprung 10a ersetzt, der in die Führungsnut 11 ragt, während der Stützring 8 mit seinem oberen Ende den oberen Lagersteg 5 festhält. Der obere Lagersteg 5 ist durch einen Verbindungsstift 36a mit dem Deckel 12 verbunden. Der Deckel 12 wird wie bei der Ausführung nach Figur 1 durch eine Ringmutter 13 auf den Stützring 8 gepresst. Im Gegensatz zu Figur 1 sind die Rastkugeln 20 mit den Federn 21 vertikal angeordnet und ragen in die auf der Unterseite des Schaltdeckels 16a liegenden Positionierausnehmungen 19, womit sich für den Deckel 12 und den Schaltdeckel 16a eine vereinfachte Ausführung ergibt. Der Schaltdeckel 16a dient zum Schalten des Kupplungsringes 42 und ist durch eine Passschraube 12 a auf dem Deckel 12 drehbar befestigt. Eine weitere Vereinfachung bei der Bearbeitung ergibt sich dadurch, dass der untere Lagersteg 6 in einen Radialring 6a und in einen Stirnring 6b unterteilt wird. Der Stützring 33 ist durch einen Haltering 33a, z.B. aus Kunststoff ergänzt, der das Herausfallen der Lagerkugeln 30 verhindert. Alle übrigen Teile sind gleich wie bei der Ausführung nach Figur 1 und 2.

## Patentansprüche

1. Gerät zur Zahnbehandlung mit einem Werkzeuggehäuse (3, 4) und einer in demselben axial verschieblich geführten Lagerhülse (24), welche über ein Exzentergetriebe (57, 58) mit einer Antriebswelle (55) in Wirkverbindung steht und zur Aufnahme eines Werkzeugs eine Bohrung (25) aufweist sowie zur Verriegelung desselben Kupplungskörper (46), welche durch einen die Lagerhülse (24) umgebenden Kupplungsring (42), wenn sich derselbe in einer Verriegelungsposition befindet, in einer Position festgehalten werden, in der sie seitlich in die Bohrung (25) ragen, während sie, wenn er sich in einer Entriegelungsposition befindet, nach aussen geschoben werden können, **dadurch gekennzeichnet, dass** der Kupplungsring (42) gegenüber der Lagerhülse (24) derart drehbar gelagert ist, daß erzwischen seiner Entriegelungsposition, in der die Kupplungskörper (46) mit über seine Innenseite verteilten Ausnehmungen (48) zur Deckung gebracht sind und seiner Verriegelungsposition durch Drehen des von aussen betätigbaren Kupplungsrings (42) umgeschaltet werden kann.

2. Gerät nach Anspruch 1, **dadurch gekennzeichnet, dass** es zum Umschalten zwischen der Verriegelungsposition und der Entriegelungsposition des Kupplungsringes (42) einen am Werkzeuggehäuse (3) drehbar gelagerten Schaltdeckel (16a) aufweist, welcher einen Mitnehmerstift (40) trägt, der mit einer Mitnehmergabel (43) am Kupplungsring (42) eingreift.

3. Gerät nach Anspruch 1 oder 2, **dadurch gekennzeichnet, dass** das Exzentergetriebe (57, 58) einen auf einer Antriebswelle (55) angeordneten Exzenterstift (57) umfasst, welcher in einen Schlitz (58) eines Hubbolzens (59) ragt, der in zwei Armen (60) verschiebbar geführt ist, welche an der Lagerhülse (24) abgestützt sind.

4. Gerät nach Anspruch 3, **dadurch gekennzeichnet, dass** an den beiden Stirnflächen des Hubbolzens (59) je eine Druckfeder (63) mit dem einen Ende abgestützt ist, während das andere Ende sich an einem der Arme (60) abstützt.

5. Gerät nach Anspruch 1 oder 2, **dadurch gekennzeichnet, dass** der Schlitz (58) des Exzentergetriebes (57, 58) in einem an der Lagerhülse (24) befestigten Stützring (33) ausgespart ist.

6. Kombination eines Gerätes nach einem der Ansprüche 1 bis 5 mit einem Polierwerkzeug, **dadurch gekennzeichnet, dass** das Polierwerkzeug (27) als hakenförmiger Stab ausgebildet ist, dessen Endpartie als mit einer Diamantierung beschichtetes Endstück (66) ausgebildet ist.

7. Kombination nach Anspruch 6, **dadurch gekennzeichnet, dass** das Endstück (66) einen länglich ovalen Querschnitt aufweist.

8. Kombination eines Gerätes nach einem der Ansprüche 1 bis 5 mit einem Polierwerkzeug, **dadurch gekennzeichnet, dass** das Polierwerkzeug (27) einen abgekröpften Schaftteil (65) mit Kreisquerschnitt aufweist sowie ein Endstück (66), das als ein mit zwei in Richtung zum Werkzeuggehäuse (3) hin zusammenlaufenden Flanken (67) geformtes Profil geformt ist, welches auf der dem Werkzeuggehäuse (3) abgewandten Seite eine ebene Fläche (68) aufweist.

9. Kombination eines Gerätes nach einem der Ansprüche 1 bis 5 mit einem Polierwerkzeug, **dadurch gekennzeichnet, dass** das Polierwerkzeug (27) als gerader Stab ausgebildet ist und an einem Ende eine Befestigungsrille (47a) und am anderen Ende ein birnen- oder spatenförmiges Endstück (66c) aufweist.

## Claims

1. Apparatus for dental treatment having a tool housing (3, 4) and a bearing sleeve (24) contained in the same in an axially displaceable manner, which sleeve is in operative connection with a drive shaft (55) by way of an eccentric drive (57, 58) and has a passage (25) for receiving a tool and coupling bodies (46) for locking the same, which coupling bodies, by means of a coupling ring (42) surrounding the bearing sleeve (24), when the coupling ring is located in a locking position, are held in a position in which they project laterally into the passage (25), whereas, if the ring is located in an unlocking position, they can be pushed outwardly, characterised in that the coupling ring (42) is rotatably mounted relative to the bearing sleeve (24) so that it can be switched over between its unlocking position, in which the coupling bodies (46) are brought into coincidence with recesses (48) distributed over its inner side, and its locking position, by rotation of the coupling ring (42) which is able to be activated from the outside.

2. Apparatus according to claim 1, characterised in that, in order to switch over between the locking position and the unlocking position of the coupling ring (42), it has a switch cover (16a), rotatably mounted on the tool housing (3), which supports a driver pin (40) which engages with a driver fork (43) on the coupling ring (42).

3. Apparatus according to claim 1 or 2, characterised in that the eccentric drive (57, 58) comprises an eccentric pin (57), arranged on a drive shaft (55) which projects into a slot (58) of a lifting bolt (59) which is guided in a displaceable manner in two arms (60) which are supported on the bearing sleeve (24).

4. Apparatus according to claim 3, characterised in that, on both end surfaces of the lifting bolt (59), there is supported a respective pressure spring (63) with one end, whilst the other end is supported on one of the arms (60).

5. Apparatus according to claim 1 or 2, characterised in that the slot (59) of the eccentric drive (57, 58) is recessed in a supporting ring (33) secured to the bearing sleeve (24).

6. A combination of an apparatus according to one of claims 1 to 5 with a polishing tool, characterised in that the polishing tool (27) is formed as a hook-shaped bar, the end section of which is formed as an end piece (66) with fine diamond coating.

7. A combination according to claim 6 characterised in that the end piece (66) has an elongate oval cross-section.

8. A combination of an apparatus according to one of claims 1 to 5 with a polishing tool, characterised in that the polishing tool (27) has a bent shaft part (65) with a circular cross-section, as well as an end piece (66) which is formed as a profile shaped with two sides (67) converging in the direction of the tool housing (3), which has a plane surface (68) on the side facing away from the tool housing (3).

9. A combination of an apparatus according to one of claims 1 to 5 with a polishing tool, characterised in that the polishing tool (27) is formed as a straight bar and on one end has a fastening groove (47a) and on the other end a pear-shaped or spade-shaped end piece (66c).

## Revendications

1. Appareil pour le traitement dentaire, comprenant un logement d'instrument (3, 4) et un manchon de palier (24) guidé en coulissement axial dans ce dernier, qui se trouve en liaison de travail avec un arbre d'entraînement (55) à l'intervention d'une transmission excentrique (57, 58), et qui présente un alésage (25) pour que vienne s'y loger un instrument, ainsi que des corps de couplage (46) pour le verrouillage de ce dernier, qui sont maintenus dans une position dans laquelle ils font saillie latéralement dans l'alésage (25), à l'intervention d'un anneau de couplage (42) entourant le manchon de palier (24) lorsque l'anneau se trouve dans une position de verrouillage, tandis qu'ils peuvent être poussés vers l'extérieur lorsque l'anneau se trouve dans une position de déverrouillage, caractérisé en ce que l'anneau de couplage (42) est monté en rotation par rapport au manchon de palier (24) de telle sorte qu'il puisse commuter entre une position de déverrouillage, dans laquelle les corps de couplage (46) sont recouverts par des évidements (48) répartis sur son côté interne, et une position de verrouillage par rotation de l'anneau de couplage (42) actionnable de l'extérieur.

2. Appareil selon la revendication 1, caractérisé en ce que, pour sa commutation entre la position de verrouillage et la position de déverrouillage, l'anneau de couplage (42) présente un couvercle de commutation (16a) monté en rotation contre le logement d'instrument (3), qui porte une broche d'entraînement (40) qui vient s'engrener avec une fourche d'entraînement (43) sur l'anneau de couplage (42).

3. Appareil selon la revendication 1 ou 2, caractérisé en ce que la transmission excentrique (57, 58) englobe une broche excentrique (57) disposée sur un arbre d'entraînement (55), qui fait saillie dans une fente (58) pratiquée dans un boulon de levage (59) qui est guidé en coulissement dans deux bras (60) qui viennent s'appuyer contre le manchon de palier (24).

4. Appareil selon la revendication 3, caractérisé en ce que, contre les deux faces frontales du boulon de levage (59), vient s'appuyer respectivement un ressort de pression (63) avec une de ses extrémités, tandis que l'autre extrémité vient s'appuyer contre un des bras (60).

5. Appareil selon la revendication 1 ou 2, caractérisé en ce que la fente (58) de la transmission excentrique (57, 58) est évidée dans un anneau d'appui (33) fixé au manchon de palier (24).

6. Combinaison d'un appareil selon l'une quelconque des revendications 1 à 5, avec un instrument de polissage, caractérisée en ce que l'instrument de polissage (27) est réalisé en une tige en forme de crochet dont la partie terminale est réalisée en une partie terminale (66) garnie d'une couche de diamant.

7. Combinaison selon la revendication 6, caractérisée en ce que la partie terminale (66) présente une section transversale oblongue.

8. Combinaison d'un appareil selon l'une quelconque des revendications 1 à 5, avec un instrument de polissage, caractérisée en ce que l'instrument de polissage (27) présente une partie d'arbre coudée (65) à section transversale circulaire, ainsi qu'une partie terminale (66) qui est façonnée en forme d'un profil façonné avec deux flancs (67) s'étendant conjointement en se rapprochant en direction du logement d'appareil (3), qui présente une surface plane (68) du côté qui se détourne du logement d'instrument (3).

9. Combinaison d'un appareil selon l'une quelconque des revendications 1 à 5, avec un instrument de polissage, caractérisée en ce que l'instrument de polissage (27) est réalisé en forme de tige rectiligne et présente, à une extrémité, une rainure de fixation (47a) et, à l'autre extrémité, une partie terminale (66c) en forme de poire ou en forme de bêche.
